# EUROPÄISCHE PATENTANMELDUNG

(11) **EP 3 944 788 A1**
(43) Veröffentlichungstag der Anmeldung: **02.02.2022**
(21) Anmeldenummer: 21170756.7
(22) Anmeldetag: 27.04.2021
(51) Int. Cl.: A47B 9/20

(54) **HUBSÄULE UND ANTRIEBSSYSTEM FÜR EIN HUBSYSTEM EINES MÖBELS**

(30) Priorität: 30.07.2020 DE 102020209631
(71) Anmelder: Kesseböhmer Holding KG, 49152 Bad Essen (DE)
(72) Erfinder: ALBERT, Marcus, 73272 Neidlingen (DE); KLOTZ, Julian, 72660 Beuren (DE); NONNENMACHER, Andreas, 73095 Albershausen (DE); BARKAU, René, 49179 Ostercappeln (DE)
(74) Vertreter: Prüfer & Partner mbB Patentanwälte · Rechtsanwälte

(57) **Zusammenfassung**

Eine Hubsäule (3) für ein Hubsystem (2) eines Möbels wird bereitgestellt. Die Hubsäule (3) weist mindestens zwei teleskopartig gegeneinander verschiebbare Rohrabschnitte (4, 5), einen Hochvolt-Gleichstrommotor (6) und Getriebe (7) zum Umwandeln einer Drehbewegung in eine Linearbewegung auf, wobei der Hochvolt-Gleichstrommotor (6) und das Getriebe (7) innerhalb zumindest eines der mindestens zwei teleskopartig gegeneinander verschiebbaren Rohrabschnitte (4, 5) angeordnet sind.

## Beschreibung

Die Erfindung betrifft eine Hubsäule und ein Antriebssystem für ein Hubsystem eines Möbels, insbesondere eine Hubsäule und ein Antriebssystem für eine motorische Höhenverstellung einer Komponente eines Möbels.

Im Stand der Technik sind Hubsäulen und Antriebssysteme für Möbel, beispielsweise für Tischplatten von Tischen, bekannt. Diese Hubsäulen werden mit Hilfe von Elektromotoren, die mittels einer niedrigen Spannung von kleiner als 50V betrieben werden, angetrieben.

Eine Verwendung einer solchen Spannung hat aber den Nachteil, dass ein Netzteil, mit einem Transformator, das eine Netzspannung des Versorgungsnetzes in die niedrige Spannung transformiert und gleichrichtet, erforderlich ist. Dabei besteht das Problem, dass der Transformator in der richtigen Weise ausgelegt werden muss. Eine Auslegung auf eine zu geringe Leistung führt dazu, dass beispielsweise die Tischplatte mit einer bestimmten Last nicht mehr mit einer gewünschten Geschwindigkeit hochgefahren werden kann. Bei einer Auslegung auf eine zu hohe Leistung erhöhen sich die Kosten für den Transformator und außerdem vergrößert sich ein ohnehin relativ großer Platzbedarf des Transformators.

Wenn die Motoren in die Hubsäulen eingebaut werden, besteht darüber hinaus ein Platzproblem, da die Abmessungen der Hubsäulen aufgrund der Größe des Motors gegebenenfalls vergrößert werden müssen.

Die der Erfindung zugrunde liegende Aufgabe besteht darin, die obigen Nachteile zu beseitigen und eine Hubsäule und ein Antriebssystem für ein Hubsystem bereitzustellen, die zumindest ähnliche Leistungswerte mit einem geringeren Platzbedarf bereitstellen, wobei auch die Herstellkosten reduziert sind.

Die Aufgabe wird durch eine Hubsäule gemäß Anspruch 1 und ein Antriebssystem gemäß Anspruch 4 gelöst. Vorteilhafte Weiterentwicklungen sind in den abhängigen Ansprüchen enthalten.

Gemäß einem Aspekt der Erfindung weist eine Hubsäule für ein Hubsystem eines Möbels mindestens zwei teleskopartig gegeneinander verschiebbare Rohrabschnitte, einen Hochvolt-Gleichstrommotor, und ein Getriebe, insbesondere ein Spindel-Spindelmutter-System, zum Umwandeln einer Drehbewegung in eine Linearbewegung auf. Der Hochvolt-Gleichstrommotor und das Getriebe sind in zumindest einem der mindestens zwei teleskopartig gegeneinander verschiebbaren Rohrabschnitte angeordnet.

Der als Hochvolt-Gleichstrommotor bezeichnete Gleichstrommotor wird mit einer Gleichspannung betrieben, die, im Gegensatz zu sogenannten Niedervolt-Gleichstrommotoren, die mit Gleichspannungen von kleiner als 60V betrieben werden, in einem Bereich von über 60V liegt.

Das Getriebe wandelt die Drehbewegung des Hochvolt-Gleichstrommotors in eine Linearbewegung um, die auf die Hubsäule übertragen wird. Dabei verschieben sich die mindestens zwei teleskopartig gegeneinander verschiebbaren Rohr- bzw. Säulenabschnitte, die beliebige geeignete Querschnitte haben können, zueinander, und verändern somit eine Länge der Hubsäule, um beispielsweise die Höhenverstellung einer Tischplatte durchzuführen.

Gemäß einer vorteilhaften Ausgestaltung der Hubsäule ist der Hochvolt-Gleichstrommotor dazu ausgebildet, mit einer lokalen gleichgerichteten Netzspannung betrieben zu werden.

Durch die Verwendung eines solchen Hochvolt-Gleichstrommotors ist es nicht erforderlich, einen Transformator einzusetzen, so dass dessen Kosten und Platzbedarf eingespart werden können. Die lokalen Netzspannungen sind beispielsweise in Europa die Nennspannung von 230V Wechselspannung und in USA die Nennspannung von 120V Wechselspannung.

In einer weiteren vorteilhaften Ausgestaltung der Hubsäule ist der Hochvolt-Gleichstrommotor als ein bürstenloser Motor ausgebildet.

Durch die Ausbildung als bürstenloser Motor, also mit elektronischer Kommutation, entfällt die Störquelle des Verschleißes der Bürsten. Ferner verbessert sich das Geräuschverhalten gegenüber konventionellen Gleichstrommotoren und die Baugröße des Motors verringert sich durch den Wegfall der Bürsten.

Gemäß einem weiteren Aspekt der Erfindung weist ein Antriebssystem für ein Hubsystem eines Möbels mindestens eine Hubsäule, eine Bedieneinheit, die dazu ausgebildet ist, Signale entsprechend einer Bedienanforderung auszugeben, mindestens eine Leistungselektronikschaltungseinrichtung, die dazu ausgebildet ist eine Gleichspannung bereitzustellen, und mindestens eine Ansteuerelektronikschaltungseinrichtung, die dazu ausgebildet ist, Signale entsprechend der Bewegungsanforderung an den Hochvolt-Gleichstrommotor auszugeben, auf.

Bei der Bereitstellung eines solchen Antriebssystems können die Leistungselektronikschalteinrichtungen kompakter und kostengünstiger ausgeführt werden, da es nicht erforderlich ist, eine Versorgungsspannung in eine für den Motor erforderliche Spannung umzuwandeln, und somit können der Platzbedarf sowie die Kosten für das Antriebssystem verringert werden.

Gemäß einer vorteilhaften Ausgestaltung des Antriebssystems weist das Antriebssystem eine Bediensignalübertragungseinrichtung zwischen der Bedieneinheit und mindestens einer von der Leistungselektronikschaltungseinrichtung und der Ansteuerelektronikschaltungseinrichtung auf, die als Funkverbindung ausgebildet ist.

Durch die Bediensignalübertragung zu der Leistungselektronikschaltungseinrichtung und/oder der Ansteuerelektronikschaltungseinrichtung, je nachdem, wo die Signale hinsichtlich der Bedienanforderung verarbeitet werden, als Funkverbindung, kann die Bedieneinheit an beliebigen Positionen angebracht werden, ohne dass es erforderlich ist, gegebenenfalls störende Kabelkanäle oder freiliegende Kabel dorthin zu verlegen. Ferner ist eine nachträgliche Änderung der Position, an der die Bedieneinheit angebracht ist, einfacher möglich, da keine Kabel oder Kabelkanäle an andere Stellen verlegt werden müssen.

Entsprechend einer weiteren vorteilhaften Ausgestaltung des Antriebssystems weist das Antriebssystem eine Bediensignalübertragungseinrichtung zwischen der Bedieneinheit und mindestens einer von der Leistungselektronikschaltungseinrichtung und der Ansteuerelektronikschaltungseinrichtung auf, die als Kabelverbindung ausgebildet ist.

Durch die Bediensignalübertragung zu der Leistungselektronikschaltungseinrichtung und/oder der Ansteuerelektronikschaltungseinrichtung, je nachdem, wo die Signale hinsichtlich der Bedienanforderung verarbeitet werden, als Kabelverbindung, ist es nicht erforderlich, gegebenenfalls vorhandene regulatorische Anforderungen hinsichtlich Funkverbindungen einzuhalten. Ferner ist durch eine Kabelverbindung ein zuverlässiger und störungsfreier Betrieb gewährleistet.

In einer weiteren vorteilhaften Ausgestaltung des Antriebssystems ist eine einzige Leistungselektronikschaltungseinrichtung vorgesehen, die mindestens zwei Hubsäulen sind jeweils mit einer Ansteuerelektronikschaltungseinrichtung versehen und zwischen der Leistungselektronikschaltungseinrichtung und den Ansteuerelektronikschaltungseinrichtungen sind jeweils eine Versorgungsleitung, die dazu ausgebildet ist, eine Versorgungsspannung für die Ansteuerelektronikschaltungseinrichtung bereitzustellen, und eine Kommunikationsleitung (13), die dazu ausgebildet ist, eine Signalübertragung zwischen der Leistungselektronikschaltungseinrichtung (9) und mindestens einer der Ansteuerelektronikschaltungseinrichtungen (10) bereitzustellen, vorgesehen.

Bei einem Vorsehen von nur einer Leistungselektronikschaltungseinrichtung können der Platzbedarf für eine weitere Leistungselektronikschaltungseinrichtung sowie die Kosten dafür eingespart werden. Durch das Vorsehen jeweils einer Ansteuerelektronikschaltungseinrichtung für die Hubsäulen können die Hubsäulen mit ihren Ansteuerelektronikschaltungseinrichtungen vorab als Baugruppe getestet und kalibriert werden, so dass eine vereinfachte Inbetriebnahme des Antriebssystems möglich ist. Auf Grund der Versorgungsleitung und der Kommunikationsleitung können die Energieversorgung und die Signalübertragung möglichst störungsfrei erfolgen.

Bei einer weiteren vorteilhaften Ausgestaltung des Antriebssystems ist die Ansteuerelektronikschaltungseinrichtung von einer der mindestens zwei Hubsäulen an der Hubsäule angebracht.

Das Anbringen der Ansteuerelektronikschaltungseinrichtung an der Hubsäule, gegebenenfalls in einem eigenen Gehäuse, ermöglicht ein besseres Handling der Hubsäule und der Ansteuerelektronikschaltungseinrichtung. Es ist darüber hinaus nicht erforderlich, die Ansteuerelektronikschaltungseinrichtung separat an dem Möbel zu befestigen, was einen Montageaufwand der Hubsäule an dem Möbel verringert.

Gemäß einer weiteren vorteilhaften Ausgestaltung des Antriebssystems ist die Leistungselektronikschaltungseinrichtung an einer der mindestens zwei Hubsäulen angebracht.

Durch das Anbringen der Leistungselektronikschaltungseinrichtung an einer der mindestens zwei Hubsäulen kann die sonst notwendige Kabelverbindung zwischen der Leistungselektronikschaltungseinrichtung und der einen Ansteuerelektronikschaltungseinrichtung entfallen, da eine interne Verkabelung möglich ist, was den Herstellungsaufwand verringert.

In einer weiteren vorteilhaften Ausgestaltung des Antriebssystems ist die Ansteuerleitung in die Versorgungsleitung integriert, und die Signalübertragung zu der Ansteuerelektronikschaltungseinrichtung erfolgt über die Versorgungsleitung.

Bei dieser Ausgestaltung kann der Aufwand für eine zweite Leitung eingespart werden. Die Signalübertragung erfolgt hierbei beispielsweise über Aufmodulieren der Signale auf eine Versorgungsspannung.

Bei einer anderen vorteilhaften Ausgestaltung des Antriebssystems sind die mindestens zwei Hubsäulen jeweils mit einer Leistungselektronikschaltungseinrichtung und einer Ansteuerelektronikschaltungseinrichtung versehen, und die Leistungselektronikschaltungseinrichtungen und/oder die Ansteuerelektronikschaltungseinrichtungen sind über eine Funkverbindung dazu ausgebildet, eine Signalübertragung zu realisieren.

Hierbei ist ein vollständig modularer Aufbau des Antriebssystems möglich, da auch die Leistungselektronikschaltungseinrichtungen jeweils vorab im Verbund mit der Ansteuerelektronikschaltungseinrichtung und dem Motor getestet und kalibriert werden können, so dass sich die Inbetriebnahme des Antriebssystems, insbesondere auch durch das Vorsehen der Funkverbindung, weiter vereinfacht.

Gemäß einer anderen vorteilhaften Ausgestaltung des Antriebssystems sind die mindestens zwei Hubsäulen jeweils mit einer Leistungselektronikschaltungseinrichtung und einer Ansteuerelektronikschaltungseinrichtung versehen, und die Leistungselektronikschaltungseinrichtungen und/oder die Ansteuerelektronikschaltungseinrichtungen sind über eine Kabelverbindung dazu ausgebildet, eine Signalübertragung dazwischen zu realisieren.

Auch hier ist ein vollständig modularer Aufbau des Antriebssystems möglich, da auch hier die Leistungselektronikschaltungseinrichtungen jeweils vorab im Verbund mit der Ansteuerelektronikschaltungseinrichtung und dem Motor getestet und kalibriert werden können, sodass sich die Inbetriebnahme des Antriebssystems weiter vereinfacht und eine störungsfreie Kommunikation gewährleistet ist.

In einer weiteren vorteilhaften Ausgestaltung des Antriebssystems ist mindestens eine Ansteuerelektronikschaltungseinrichtung zumindest teilweise innerhalb zumindest eines der mindestens zwei teleskopartig gegeneinander verschiebbaren Rohrabschnitte angeordnet.

Ein solcher Aufbau reduziert den Platzbedarf außerhalb der Hubsäule und ferner ist die Ansteuerelektronikschaltungseinrichtung vor einer mechanischen Beschädigung besser geschützt.

Bei einer weiteren vorteilhaften Ausgestaltung des Antriebssystems ist mindestens eine Leistungselektronikschaltungseinrichtung zumindest teilweise innerhalb zumindest eines der mindestens zwei teleskopartig gegeneinander verschiebbaren Rohrabschnitte angeordnet.

Auch ein solcher Aufbau reduziert den Platzbedarf außerhalb der Hubsäule und ferner ist die Leistungselektronikschaltungseinrichtung vor einer mechanischen Beschädigung besser geschützt.

Nachstehend wird die Erfindung basierend auf verschiedenen Ausführungsformen unter Bezugnahme auf die beigefügten Zeichnungen erläutert.

Insbesondere zeigt
- Fig. 1: einen Tisch mit einer ersten Ausführungsform eines Antriebssystems mit Hubsäulen von schräg unten;
- Fig. 2: einen Tisch mit einer zweiten Ausführungsform des Antriebssystems mit den Hubsäulen von schräg unten; und
- Fig. 3: einen Tisch mit einer dritten Ausführungsform des Antriebssystems mit den Hubsäulen von schräg unten.

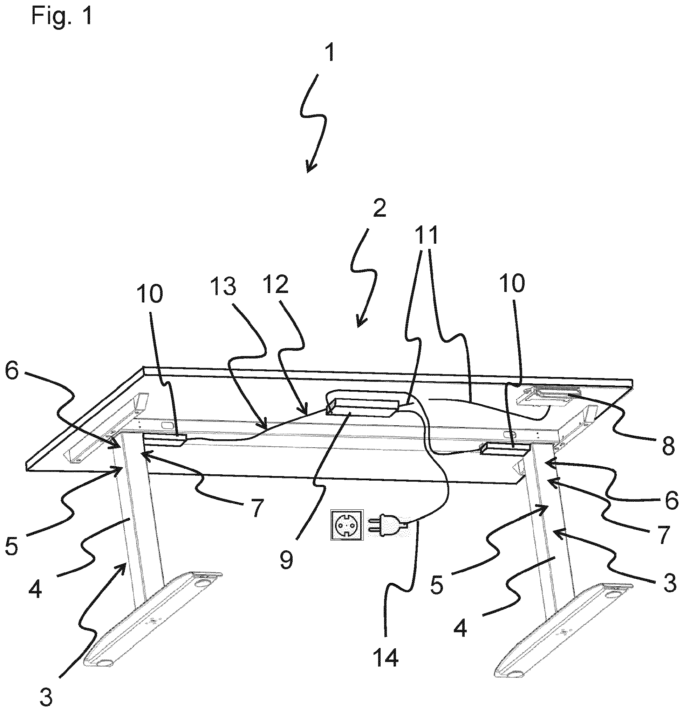

**Fig. 1** zeigt einen Tisch als ein Möbel 1 mit einer ersten Ausführungsform eines Antriebssystems 2 mit Hubsäulen 3.

Das Antriebssystem 2 weist zwei Hubsäulen 3 auf. In alternativen Ausführungsformen weist das Antriebssystem 1 lediglich eine Hubsäule 3 oder mehr als zwei Hubsäulen 3 auf.

Die Hubsäulen 3 weisen jeweils zwei teleskopartig gegeneinander verschiebbare Rohrabschnitte 4, 5 auf. Ferner weisen die Hubsäulen 3 jeweils einen Hochvolt-Gleichstrommotor 6 auf. Darüber hinaus weisen die Hubsäulen 3 jeweils ein Getriebe 7 zum Umwandeln einer Drehbewegung des Hochvolt-Gleichstrommotors 6 in eine Linearbewegung auf. Das Getriebe 7 ist als ein Spindel-Spindelmuttersystem ausgeführt, kann alternativ aber auch beispielsweise als Zahnriemengetriebe ausgeführt sein. Durch die Linearbewegung werden die zwei teleskopartig gegeneinander verschiebbaren Rohrabschnitte 4, 5 gegeneinander verschoben, sodass jeweils eine Länge der Hubsäulen 3 verändert wird, um die Höhe einer Tischplatte des Tisches einzustellen. Der Hochvolt-Gleichstrommotor 6 und das Getriebe 7 sind vollständig innerhalb der zwei teleskopartig gegeneinander verschiebbaren Rohrabschnitte 4, 5 angeordnet. In alternativen Ausführungsformen sind der Hochvolt-Gleichstrommotor 6 und das Getriebe 7 nicht vollständig innerhalb der Rohrabschnitte 4, 5 angeordnet, sondern nur zumindest teilweise innerhalb einem der Rohrabschnitte 4, 5.

Der Hochvolt-Gleichstrommotor 6 ist dazu ausgebildet, mit einer lokalen Netzspannung betrieben zu werden. Die lokale Netzspannung beträgt beispielsweise in Europa 230V und in USA 120 V. In anderen Regionen können andere Netzspannungen möglich sein. Der Betrieb mit der lokalen Netzspannung ermöglicht es, den Hochvolt-Gleichstrommotor 6 zu betreiben, ohne einen Transformator einzusetzen, der bei Motoren, die mit einer niedrigen Spannung, von beispielsweise kleiner als 60V, betrieben werden, erforderlich ist, um die lokale Netzspannung auf die niedrige Spannung zu transformieren. Der Hochvolt-Gleichstrommotor 6 ist jeweils für den Betrieb mit der lokalen Netzspannung ausgelegt. In alternativen Ausführungsformen wird ein Hochvolt-Gleichstrommotor 6 für Netzspannungen mit unterschiedlichen Nominalspannungen verwendet.

Ferner ist der Hochvolt-Gleichstrommotor 6 als bürstenloser Motor ausgebildet. Der bürstenlose Hochvolt-Gleichstrommotor 6 weist eine elektronische Kommutierung auf, die es ermöglicht, ein Betriebsgeräusch des Hochvolt-Gleichstrommotors 6 zu verringern. In alternativen Ausführungsformen ist der Hochvolt-Gleichstrommotor 6 nicht als bürstenloser Motor ausgebildet, sondern weist einen mechanischen Kommutator auf.

Das Antriebssystem 2 weist neben den Hubsäulen 3 eine Bedieneinheit 8 auf. Die Bedieneinheit 8 ist als Handschalter ausgebildet, kann jedoch alternativ auch beispielsweise als Fußschalter ausgebildet sein. Die Bedieneinheit 8 gibt Signale entsprechend einer Bedienanforderung, beispielsweise durch einen Tastendruck für eine Bewegung der Tischplatte nach oben oder unten, aus.

Außerdem weist das Antriebssystem 2 eine Leistungselektronikschaltungseinrichtung 9 auf. Die Leistungselektronikschaltungseinrichtung 9 stellt eine geeignete Stromversorgung für die Hochvolt-Gleichstrommotoren 6 der Hubsäulen 3 bereit. Im Wesentlichen wird eine Gleichspannung bereitgestellt, wobei die üblicherweise als Wechselspannung bereitgestellte lokale Netzspannung in Gleichspannung umgewandelt wird, ohne den nominellen Spannungswert zu verändern. Für die unterschiedlichen lokalen Netzspannungen wird dieselbe Leistungselektronikschalteinrichtung 9 verwendet. In alternativen Ausführungsformen sind die Leistungsschalteinrichtungen 9 an die jeweilige lokale Netzspannung angepasst.

In dieser Ausführungsform weist das Antriebssystem 2 eine einzige Leistungselektronikschaltungseinrichtung 9 auf, die zentral am Tischgestell verbaut ist. In alternativen Ausführungsformen ist die Leistungselektronikschaltungseinrichtung 9 nicht zentral, sondern an einer anderen Position in der Nähe einer der Ansteuerelektronikschaltungseinrichtung am Tischgestell oder an der Tischplatte angeordnet.

Ferner weist das Antriebssystem zwei Motortreiber als Ansteuerelektronikschaltungseinrichtungen 10 auf, die jeweils einer Hubsäule 3, insbesondere dem Hochvolt-Gleichstrommotor 6, zugeordnet sind. Die Ansteuerelektronikschaltungseinrichtungen 10 geben Signale entsprechend der Bewegungsanforderung von der Bedieneinheit 8 an den Hochvolt-Gleichstrommotor 6 aus. Dabei wird die Drehrichtung der Hochvolt-Gleichstrommotoren 6 und gegebenenfalls eine Geschwindigkeit oder ein Geschwindigkeitsverlauf, wie etwa ein Sanftanlauf, bestimmt.

Die Ansteuerelektronikschaltungseinrichtung 10 ist in einem Gehäuse auf dem Hochvolt-Gleichstrommotor 6 vorgesehen und ist außerhalb der Hubsäule 3, also der zwei teleskopartig gegeneinander verschiebbaren Rohrabschnitte 4, 5, angeordnet. In alternativen Ausführungsformen ist die Ansteuerelektronikschaltungseinrichtung 10 innerhalb der Hubsäule 3 angeordnet, oder in einem separaten Gehäuse angeordnet, das alternativ entweder innerhalb, oder teilweise außerhalb der Hubsäule 3 angeordnet ist. Dabei kann die Ansteuerelektronikschaltungseinrichtung 10 an der Hubsäule 3 oder dem Tischgestell angebracht sein. In einer weiteren alternativen Ausführungsform ist nur eine Ansteuerelektronikschaltungseinrichtung 10 vorgesehen, die beide Hubsäulen 3 versorgt.

Das Antriebssystem 2 weist in der vorliegenden Ausführungsform eine Bediensignalübertragungseinrichtung 11 in Form einer Kabelverbindung zwischen der Bedieneinheit 8 und der Leistungselektronikschaltungseinrichtung 9 auf. Über die Bedieneinheit 8 werden eine Drehrichtung des Hochvolt-Gleichstrommotors 6 sowie gegebenenfalls eine Geschwindigkeit vorgegeben. In alternativen Ausführungsformen ist die Bediensignalübertragungseinrichtung 11 als Funkverbindung zwischen der Bedieneinheit 8 und der Leistungselektronikschaltungseinrichtung 6 ausgeführt. In weiteren alternativen Ausführungsformen ist die Bediensignalübertragungseinrichtung 11 zwischen der Bedieneinheit 8 und der Ansteuerelektronikschaltungseinrichtung 10 vorgesehen.

Darüber hinaus weist das Antriebssystem 2 jeweils eine Versorgungsleitung 12 zwischen der Leistungselektronikschaltungseinrichtung 9 und den Ansteuerelektronikschaltungseinrichtungen 10 auf. Die Versorgungsleitung 12 ist ausgebildet, eine Versorgungsspannung für die Ansteuerelektronikschaltungseinrichtung 10 zur Verfügung zu stellen.

Ferner ist jeweils eine Kommunikationsleitung 13 vorgesehen, die ausgebildet ist, eine Signalübertragung zwischen der Leistungselektronikschaltungseinrichtung 9 und einer der Ansteuerelektronikschaltungseinrichtungen 10 bereitzustellen.

Aus Gründen der Übersichtlichkeit sind lediglich die Versorgungsleitung 12 und die Kommunikationsleitung 13 zwischen der Leistungselektronikschaltungseinrichtung 9 und einer der Ansteuerelektronikschaltungseinrichtungen 10 mit einem Bezugszeichen versehen.

In einer alternativen Ausführungsform ist die Kommunikationsleitung 13 in die Versorgungsleitung 12 integriert. Hierbei besteht die Möglichkeit, dass eine Polung von Einzelleitungen entsprechend einer gewünschten Drehrichtung der Hochvolt-Gleichstrommotoren 6 erfolgt und ein Betrieb der Hochvolt-Gleichstrommotoren 6 solange erfolgt, solange eine Spannung anliegt. In alternativen Ausführungsformen werden Steuersignale auf eine Versorgungsspannung aufmoduliert.

Die Leistungselektronikschaltungseinrichtung 9 wird über eine Netzanschlussleitung 14 versorgt.

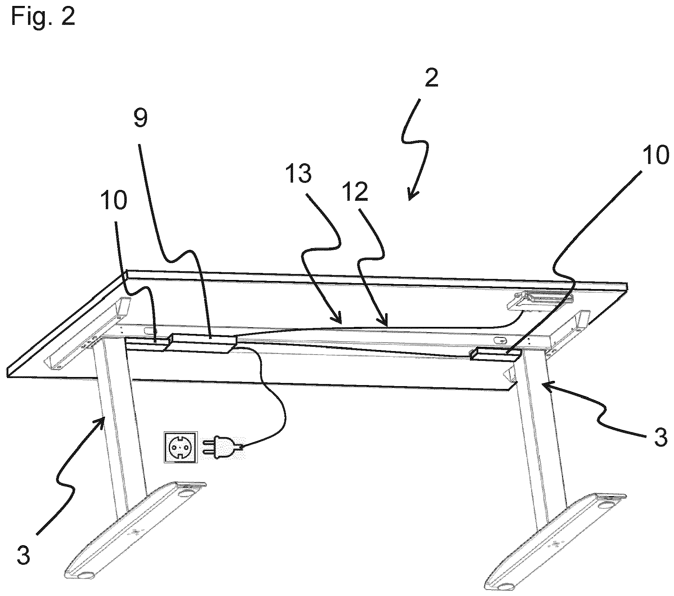

**Fig. 2** zeigt einen Tisch mit einer zweiten Ausführungsform des Antriebssystems 2 mit den Hubsäulen 3.

Die zweite Ausführungsform des Antriebssystems 2 unterscheidet sich von der ersten Ausführungsform des Antriebssystems 2 darin, dass die Leistungselektronikschaltungseinrichtung 9 nicht separat von den Ansteuerelektronikschaltungseinrichtungen 10 angeordnet ist, sondern dass die Leistungselektronikschaltungseinrichtung 9 an einer der Hubsäulen 3 angebracht ist. Die Leistungselektronikschaltungseinrichtung 9 weist ein Gehäuse auf, das an einer der zwei Hubsäulen 3, insbesondere an einem Gehäuse der Ansteuerelektronikschaltungseinrichtung 10, "angedockt" ist. Dadurch kann ein Verbindungskabel zwischen der Leistungselektronikschaltungseinrichtung 9 und der einen der Hubsäulen 3 eingespart werden.

In einer alternativen Ausführungsform kann die Leistungselektronikschaltungseinrichtung 9 auch, zumindest teilweise, in der Hubsäule 3 angeordnet sein.

Die Leistungselektronikschaltungseinrichtung 9 ist mit der anderen der Ansteuerelektronikschaltungseinrichtungen 10 mittels der Versorgungsleitung 12 und der Kommunikationsleitung 13 verbunden, wobei, in einer alternativen Ausführungsformen, die Kommunikationsleitung 13 auch hier in die Versorgungsleitung 12 integriert sein kann.

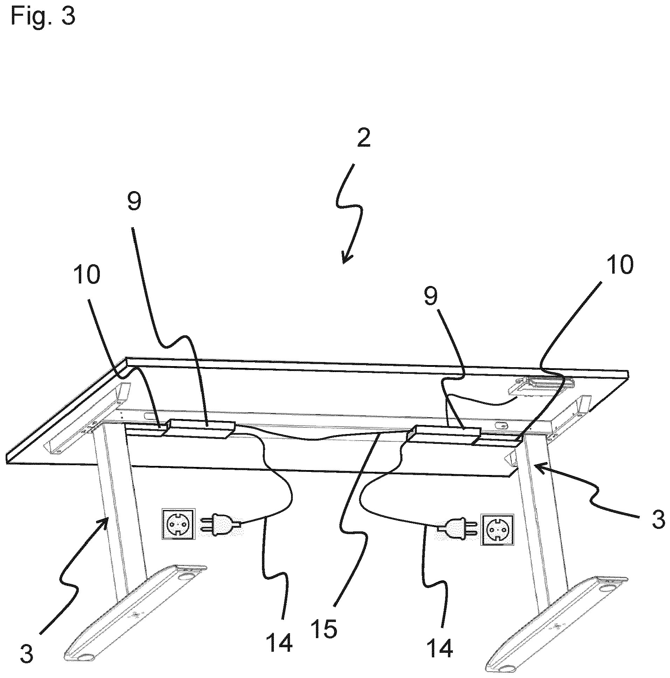

**Fig. 3** zeigt einen Tisch mit einer dritten Ausführungsform des Antriebssystems 2 mit den Hubsäulen 3.

Die dritte Ausführungsform des Antriebssystems 2 unterscheidet sich von der zweiten Ausführungsform des Antriebssystems 2 darin, dass jede der Hubsäulen 3 mit der Ansteuerelektronikschaltungseinrichtung 10 und der Leistungselektronikschaltungseinrichtung 9 versehen ist.

Die Leistungselektronikschaltungseinrichtungen 9 der beiden Hubsäulen 3 weisen eine Kommunikationssignalübertragungseinrichtung 15 auf, die eine Kabelverbindung aufweist. In alternativen Ausführungsformen können auch die Ansteuerelektronikschaltungseinrichtungen 10 der Hubsäulen 3 über die Kommunikationssignalübertragungseinrichtung 15 verbunden sein. In einer weiteren alternativen Ausführungsform weist die Kommunikationssignalübertragungseinrichtung 15 nicht eine Kabelverbindung sondern eine Funkverbindung auf.

Die beiden Leistungselektronikschaltungseinrichtungen 9 sind zur Versorgung jeweils mit einer Netzanschlussleitung 14 versehen. In einer alternativen Ausführungsform wird nur eine der Leistungselektronikschaltungseinrichtungen 9 mit einer Netzanschlussleitung 14 versehen. Weitere Leistungselektronikschaltungseinrichtungen 9 werden durch ein Kombikabel, bestehend aus der Kommunikationsleitung und der Versorgungsleitung, von der einen Leistungselektronikschaltungseinrichtung versorgt.

Im Betrieb stellt die Leistungselektronikschaltungseinrichtung 9 eine geeignete Energieversorgung für die Ansteuerelektronikschaltungseinrichtungen 10 bereit. Nach einer Betätigung eines Schaltelements an der Bedieneinheit 8 für eine gewünschte Bewegungsanforderung wird ein entsprechendes Signal durch die Bediensignalübertragungseinrichtung 11 über die Leistungselektronikschaltungseinrichtung 9 an die Ansteuerelektronikschaltungseinrichtungen 10 gegeben. Alternativ erfolgt die Bediensignalübertragung von der Bedieneinheit 8 direkt an die Ansteuerelektronikschaltungseinrichtungen 10.

Die Ansteuerelektronikschaltungseinrichtungen 10 stellen geeignete Signale für die Hochvolt-Gleichstrommotoren 6 der Hubsäulen 3 bereit, um die Bewegung entsprechend der Bewegungsanforderung auszuführen.

Alle in der Beschreibung, den nachfolgenden Ansprüchen und der Zeichnung dargestellten Merkmale können sowohl einzeln als auch in beliebiger Kombination miteinander erfindungswesentlich sein.

## Patentansprüche

1. Hubsäule (3) für ein Hubsystem (2) eines Möbels, wobei die Hubsäule (3) aufweist:
mindestens zwei teleskopartig gegeneinander verschiebbare Rohrabschnitte (4, 5),
einen Hochvolt-Gleichstrommotor (6), und
ein Getriebe (7) zum Umwandeln einer Drehbewegung in eine Linearbewegung,
wobei
der Hochvolt-Gleichstrommotor (6) und das Getriebe (7) in zumindest einem der mindestens zwei teleskopartig gegeneinander verschiebbaren Rohrabschnitte (4, 5) angeordnet sind.

2. Hubsäule (3) gemäß Anspruch 1, wobei
der Hochvolt-Gleichstrommotor (6) dazu ausgebildet ist, mit einer gleichgerichteten lokalen Netzspannung betrieben zu werden.

3. Hubsäule (3) gemäß Anspruch 1 oder 2, wobei
der Hochvolt-Gleichstrommotor (6) als ein bürstenloser Motor ausgebildet ist.

4. Antriebssystem (2) für ein Hubsystem eines Möbels (1), aufweisend;
mindestens eine Hubsäule (3) gemäß einem der vorangehenden Ansprüche,
eine Bedieneinheit (8), die dazu ausgebildet ist, Signale entsprechend einer Bedienanforderung auszugeben,
mindestens eine Leistungselektronikschaltungseinrichtung (9), die dazu ausgebildet ist, eine Gleichspannung bereitzustellen, und
mindestens eine Ansteuerelektronikschaltungseinrichtung (10), die dazu ausgebildet ist, Signale entsprechend der Bewegungsanforderung an den Hochvolt-Gleichstrommotor (6) auszugeben.

5. Antriebssystem gemäß Anspruch 4, wobei
das Antriebssystem (2) eine Bediensignalübertragungseinrichtung (11) zwischen der Bedieneinheit (8) und mindestens einer von der mindestens einen Leistungselektronikschaltungseinrichtung (9) und der mindestens einen Ansteuerelektronikschaltungseinrichtung (10) aufweist, die als Funkverbindung ausgebildet ist.

6. Antriebssystem (2) gemäß Anspruch 4, wobei
das Antriebssystem (2) eine Bediensignalübertragungseinrichtung (11) zwischen der Bedieneinheit (8) und mindestens einer von der mindestens einen Leistungselektronikschaltungseinrichtung (9) und der mindestens einen Ansteuerelektronikschaltungseinrichtung (10) aufweist, die als Kabelverbindung ausgebildet ist.

7. Antriebssystem (2) gemäß einem der Ansprüche 4 bis 6, wobei
mindestens zwei Hubsäulen (3) vorgesehen sind,
eine einzige Leistungselektronikschaltungseinrichtung (9) vorgesehen ist,
die mindestens zwei Hubsäulen (3) jeweils mit einer der mindestens einen Ansteuerelektronikschaltungseinrichtung (10) versehen sind, und
zwischen der Leistungselektronikschaltungseinrichtung (9) und den Ansteuerelektronikschaltungseinrichtungen (10) eine Versorgungsleitung (12), die dazu ausgebildet ist, eine Versorgungsspannung für die Ansteuerelektronikschaltungseinrichtung (10) bereitzustellen, und
eine Kommunikationsleitung (13), die dazu ausgebildet ist, eine Signalübertragung zwischen der Leistungselektronikschaltungseinrichtung (9) und mindestens einer der Ansteuerelektronikschaltungseinrichtungen (10) bereitzustellen, vorgesehen sind.

8. Antriebssystem (2) gemäß Anspruch 7, wobei
die Ansteuerelektronikschaltungseinrichtung (10) von einer der mindestens zwei Hubsäulen (3) an der Hubsäule (3) angebracht ist.

9. Antriebssystem (2) gemäß Anspruch 8, wobei
die Leistungselektronikschaltungseinrichtung (9) an einer der mindestens zwei Hubsäulen (3) angebracht ist.

10. Antriebssystem (2) gemäß Anspruch 6 und einem der Ansprüche 7 bis 9, wobei
die Kommunikationsleitung (13) in die Versorgungsleitung (12) integriert ist, und die Signalübertragung zu der Ansteuerelektronikschaltungseinrichtung (10) über die Versorgungsleitung (12) erfolgt.

11. Antriebssystem (2) gemäß einem der Ansprüche 4 bis 6, wobei
die mindestens zwei Hubsäulen (3) jeweils mit einer Leistungselektronikschaltungseinrichtung (9) und einer Ansteuerelektronikschaltungseinrichtung (10) versehen sind, und
die Leistungselektronikschaltungseinrichtungen (9) und/oder die Ansteuerelektronikschaltungseinrichtungen (10) dazu ausgebildet sind, eine Signalübertragung dazwischen als Funkverbindung auszubilden.

12. Antriebssystem (2) gemäß einem der Ansprüche 4 bis 6, wobei
die mindestens zwei Hubsäulen (3) jeweils mit einer Leistungselektronikschaltungseinrichtung (9) und einer Ansteuerelektronikschaltungseinrichtung (10) versehen sind, und
die Leistungselektronikschaltungseinrichtungen (9) und/oder die Ansteuerelektronikschaltungseinrichtungen (10) dazu ausgebildet sind, eine Signalübertragung dazwischen als Kabelverbindung auszubilden.

13. Antriebssystem (2) gemäß einem der Ansprüche 4 bis 12, wobei
die Ansteuerelektronikschaltungseinrichtung (10) oder die Ansteuerelektronikschaltungseinrichtungen (10) zumindest teilweise innerhalb zumindest eines der mindestens zwei teleskopartig gegeneinander verschiebbaren Rohrabschnitte (4, 5) angeordnet ist oder sind.

14. Antriebssystem (2) gemäß einem der Ansprüche 4 bis 13, wobei
die Leistungselektronikschaltungseinrichtung (9) oder die Leistungselektronikschaltungseinrichtungen (9) zumindest teilweise innerhalb zumindest eines der mindestens zwei teleskopartig gegeneinander verschiebbaren Rohrabschnitte (4, 5) angeordnet ist oder sind.
